# DEMANDE DE BREVET EUROPEEN

(11) **EP 1 057 583 A1**
(43) Date de publication de la demande: **06.12.2000**
(21) Numéro de dépôt: 00420110.9
(22) Date de dépôt: 26.05.2000
(51) Int. Cl.: B23Q 3/154, B29C 33/32, H01F 5/06, B29C 45/17

(54) **Plateau magnétique pour la fixation de moules sur des machines à injecter**

(30) Priorité: 31.05.1999 FR 9907028
(71) Demandeur: Walker Braillon Magnetics, 73800 Sainte Helene du Lac (FR)
(72) Inventeur: Doyelle, Pierre, 73800 Montmelian (FR); Klein, Nicolas, 73000 Chambery (FR); Lecussan, Pierre, 73000 Barberaz (FR)
(74) Mandataire: Bratel, Gérard

(57) **Abrégé**

Ce plateau magnétique, du type "électro-permanent", est destiné à la fixation de moules sur les machines à injecter le caoutchouc ou les élastomères.

Le plateau (1) comporte, sur un côté d'une partie telle que semelle (2) recevant des éléments chauffants (4), une pluralité de pôles magnétiques comportant chacun un ou plusieurs aimants permanents (8), recouverts par une pièce polaire (9). Le ou les aimants (8) sont entourés d'un bobinage électrique (10) formé de spires de câble métallique (11) avec isolation à base de verre et de silicone. Le bobinage (10) est lui-même enrobé dans une matière de blocage (12) telle que résine "haute température" ou ciment réfractaire.

## Description

La présente invention concerne un plateau magnétique pour la fixation de moules sur des machines à injecter le caoutchouc ou les élastomères.

L'exploitation des presses à injecter nécessite le bridage des moules sur les parties fixe et mobile de ces machines. Traditionnellement, ce bridage est mécanique. Une autre solution connue consiste en l'utilisation de plateaux magnétiques, avec un premier plateau magnétique monté sur la plaque fixe de la presse pour la fixation d'une moitié du moule, et un second plateau magnétique monté sur la plaque mobile de la presse pour la fixation de l'autre moitié du moule complémentaire de la première. Ces plateaux magnétiques comportent des aimants permanents, pilotés par des bobines électriques reliées à un groupe électronique de commande. L'envoi d'impulsions de courant électrique dans les bobines assure la magnétisation et la démagnétisation des aimants permanents, aucun courant électrique n'étant nécessaire pour maintenir ces aimants à l'état magnétisé. Dans cet état, les aimants assurent la fixation des moitiés de moule par attraction magnétique, jusqu'à ce qu'ils soient démagnétisés par le groupe de commande. Ainsi, on dispose de plateaux magnétiques de type "électro-permanent" qui assurent une fixation forte et sûre des moules sur les presses, d'une façon économique, en permettant un bridage rapide et un changement rapide et aisé des moules, même de grandes dimensions, sans nécessité de modification des moules traditionnels.

Dans les réalisations pratiques actuelles de tels plateaux magnétiques, en particulier celles déjà commercialisées par le Demandeur sous la dénomination "EPM", les pôles avec aimants permanents et bobines sont disposés en "rosace" dans le cas des plateaux de relativement petites dimensions, et comportent une disposition en "pôles parallèles" pour les plateaux de plus grandes dimensions. Les deux types de plateaux magnétiques, à savoir "rosace" et "pôles parallèles", sont construits selon le même principe :

Ces plateaux comportent une semelle en acier doux, un cadre ou "squelette" oxycoupé, des aimants du type ALNICO répartis en groupes d'aimants, des pôles en acier doux placés en correspondance avec les groupes d'aimants, et, autour de chaque groupe d'aimants, une bobine électrique en fils émaillés.

Les aimants du type ALNICO gardent leurs performances avec l'élévation de la température, et les pôles en acier doux homogénéisent et concentrent le flux magnétique issu de ces aimants. La bobine en fils émaillés, associée à chaque groupe d'aimants, est alimentée en courant redressé par le groupe électronique de commande, pour opérer la magnétisation et la démagnétisation des aimants. Les temps d'alimentation en courant de chaque bobine sont de l'ordre de 0,8 seconde, car les surfaces d'aimants et de pôles favorisent les courants de Foucault, qu'il convient d'éviter (la technique antérieure, qui consistait à envoyer dans les bobines des décharges de condensateurs de très faible durée, de l'ordre de 5 millisecondes, créait des courants antagonistes forts empêchant la saturation des aimants).

Dans ces plateaux magnétiques existants, les fils émaillés et les isolants des bobines sont de classe "H", résistant à une température de 180° C. La résine de blocage, du genre "ARALDITE" (marque enregistrée), résiste à une température de 140° C. Ces plateaux sont donc proposés pour une utilisation jusqu'à une température de 120° C, ce qui couvre entièrement les besoins de l'injection des matières plastiques courantes qui nécessite, d'une manière générale, une température de moule de l'ordre de 80° à 90° C.

Il n'en est pas de même pour l'injection du caoutchouc, pour laquelle le moule doit être maintenu en permanence à une température nettement plus élevée, de l'ordre de 200° à 220° C. A ces températures, l'apport calorifique assuré par la seule matière injectée dans le moule n'est pas suffisant pour compenser les déperditions de chaleur ; il est donc nécessaire de chauffer et de maintenir en température les moules.

A cet effet, la technique usuelle consiste à garnir le plateau de presse d'un isolant thermique, sur lequel est placé un plateau chauffant à cartouches chauffantes électriques, qui reçoit lui-même la moitié de moule correspondante, bridée mécaniquement. Ainsi, la moitié de moule est chauffée et maintenue en température.

Pour que cette moitié de moule soit maintenue à une température de l'ordre de 200° à 220° C, il est nécessaire que la température au niveau du plateau chauffant soit d'au moins 220° à 240° C. En l'état actuel de la technique, on ne connaît aucun plateau magnétique permettant la fixation de moules maintenus à de telles températures, les plateaux existants (dont les caractéristiques ont été rappelées ci-dessus) étant notablement insuffisants.

Or la demande de plateaux magnétiques capables de maintenir les moules d'injection de caoutchouc, ou d'autres moules utilisés à des températures élevées, est particulièrement forte car le démontage d'un moule chaud, ou le montage d'un moule préchauffé, ne sont pas des opérations aisées dans le cas d'un bridage mécanique.

La présente invention vise à satisfaire ce besoin, en fournissant un plateau magnétique pour la fixation de moules, spécialement adapté à des moules d'injection de caoutchouc, ou d'autres matières analogues nécessitant un maintien du moule à température élevée.

A cet effet, l'invention a pour objet un plateau magnétique pour la fixation de moules sur des machines à injecter, ce plateau magnétique étant du type "électro-permanent", avec des aimants permanents entourés par des bobines électriques, ce plateau magnétique étant caractérisé en ce qu'il comporte, sur un côté d'une partie recevant des éléments chauffants, une pluralité de pôles magnétiques comportant chacun un ou plusieurs aimants recouverts par une pièce polaire, et entourés d'un bobinage formé de spires de câble métallique avec isolation à base de verre et de silicone, le bobinage étant lui-même enrobé dans une matière de blocage telle que résine "haute température" ou ciment réfractaire.

La partie recevant les éléments chauffants peut être une semelle chauffante en acier doux, pourvue d'alésages recevant des cartouches chauffantes, située du côté opposé à la fixation des moules. Un cadre an matière ferromagnétique peut être appliqué et fixé contre une face de la semelle, pour délimiter une pluralité d'ouvertures correspondant aux pôles magnétiques du plateau, dont la disposition est, de préférence, du type "pôles parallèles". Quant aux aimants, ceux-ci sont avantageusement du type ALNICO.

Selon un mode de réalisation particulier, les bobinages entourant les aimants, et servant à magnétiser et démagnétiser ces aimants, sont constitués de spires de câble avec âme en cuivre, entourée de guipages de verre imprégnés de silicone, eux-mêmes recouverts d'une tresse de verre siliconée.

Ainsi, dans l'ensemble, il est réalisé un plateau magnétique de type "électro-permanent", lequel résiste parfaitement aux températures requises pour les moules d'injection de caoutchouc, et qui, par ailleurs, possède un fonctionnement satisfaisant. En particulier, les aimants ALNICO conservent leurs propriétés magnétiques jusque vers 400°C, et le genre de câble préconisé pour les bobinages peut être utilisé à des températures de 280° à 350°C. De plus, ce type de câble garantit un isolement à la fois épais et souple entre les spires des bobinages, évitant les courts-circuits qui pourraient résulter des compressions dues aux coefficients de dilatation différents de cuivre, de l'acier et des résines. La résine de blocage incorporée au plateau magnétique objet de l'invention est, elle aussi, résistante aux températures élevées. Le choix d'une disposition à "pôles parallèles" est avantageux, cette disposition rendant les aimants plus faciles à magnétiser qu'une autre disposition, telle que le type "rosace". Enfin, utilisé avec un groupe de commande envoyant des trains d'impulsions particuliers dans ses bobinages, le plateau magnétique objet de l'invention peut être magnétisé totalement, en évitant les courants de Foucault.

L'invention sera mieux comprise à l'aide de la description qui suit, en référence au dessin schématique annexé représentant, à titre d'exemple, une forme de réalisation de ce plateau magnétique pour la fixation de moules sur des machines à injecter:
Figure 1 est une vue de face d'un plateau magnétique conforme à la présente invention;
Figure 2 est une vue partielle en coupe de ce plateau magnétique, suivant II-II de figure 3.
Figure 3 est un schéma illustrant l'utilisation d'un tel plateau magnétique, en relation avec un moule.

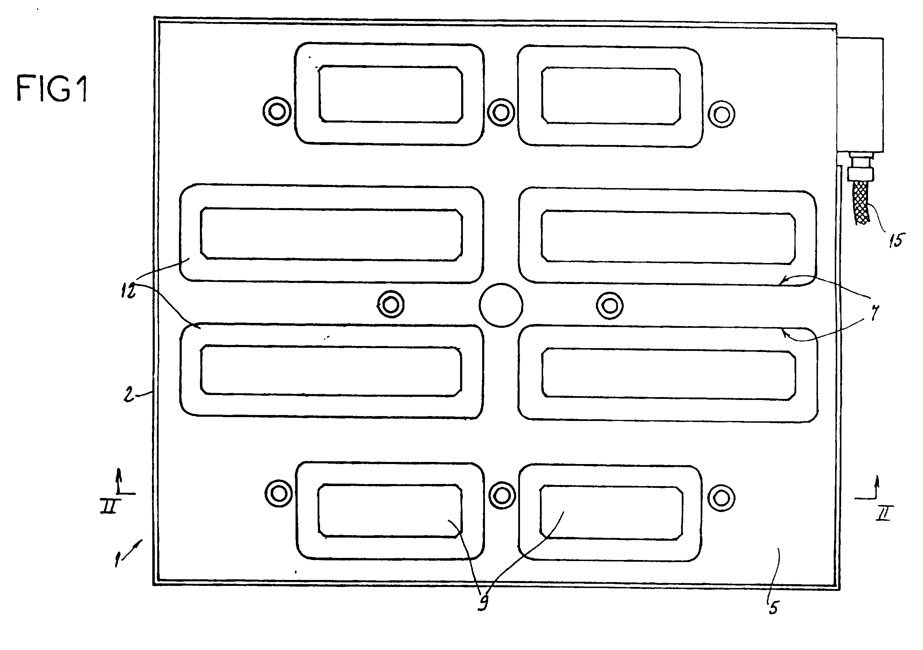

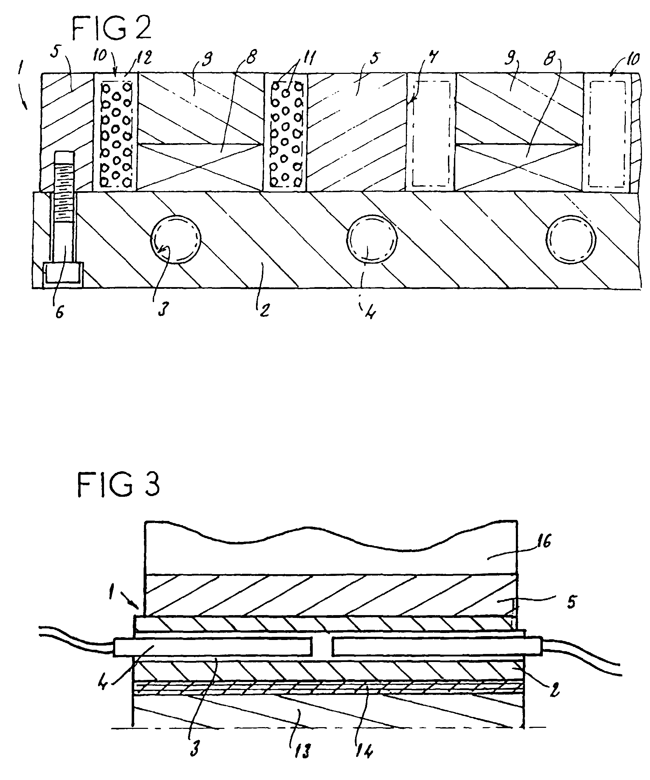

Le plateau magnétique électro-permanent 1, représenté sur les figures 1 et 2, possède une semelle en acier doux 2, pourvue d'alésages 3 recevant des cartouches chauffantes 4. Sur une grande face de la semelle 2 est appliqué un cadre 5 en matière ferromagnétique, fixé à la semelle 2 au moyen de la vis 6. Le cadre 5 délimite une pluralité d'ouvertures 7 de forme générale rectangulaire, plus ou moins allongée, qui correspondent aux pôles magnétiques du plateau 1, dont la disposition est ici du type "pôles parallèles".

Chaque pâle comporte un groupe d'aimants permanents 8, du type ALNICO (alliage de fer, aluminium, nickel et cobalt), qui conservent leurs propriétés magnétiques jusqu'à une température de l'ordre de 400°C. Les aimants 8 sont, d'un côté, appliqués contre la semelle 2 et, du côté opposé, recouverts par une pièce polaire 9 en acier doux, affleurant la surface extérieure du cadre 5.

Pour chaque pôle, l'ensemble formé par les aimants 8 et par la pièce polaire 9 est entouré d'un bobinage électrique 10, formé de spires de câble en cuivre 11, avec isolation à base de verre et de silicone. Plus particulièrement, il s'agit d'un câble dont l'âme en cuivre est entourée de guipages de verre imprégnés de silicone, eux-mêmes recouverts d'une tresse de verre siliconée, tel que le câble produit par la Société OMERIN, et disponible sous la dénomination commerciale "SILICABLE VS". Un tel câble 11 résiste à des températures de l'ordre de 280°C à 350°C.

Le bobinage 10, ainsi constitué, est enrobé dans une matière de blocage 12 en résine "haute température" ou en ciment réfractaire, qui le fixe dans l'ouverture 7 correspondante.

A titre d'exemple, chaque bobinage 10 peut comporter 22 spires de câble 11 de section conductrice égale à 2,5 mm2, des résultats très acceptables ayant été obtenus avec des bobinages possédant de telles caractéristiques, et ceci malgré la variation de la résistance électrique du câble avec la température.

Comme l'illustre la figure 3, le plateau magnétique 1 précédemment décrit est monté (pour son utilisation) sur un plateau 13, fixe ou mobile, d'une presse à injecter, pourvu d'un isolant thermique 14. Le plateau magnétique 1 est relié à un groupe de commande, non représenté, par un câble électrique 15 (voir aussi figure 1).

Pour la magnétisation des aimants 8 du plateau 1, on envoie dans les bobinages 10, à partir du groupe de commande précité, des trains d'impulsions électriques successives, toutes redressées dans le même sens. Par exemple, un train de dix impulsions de même sens, la durée totale de ce train d'impulsions étant de 0,1 seconde, convient pour magnétiser complètement les aimants 8, et permettre ainsi au plateau magnétique 1 de retenir fermement, par attraction magnétique, une moitié de moule 16.

Pour démagnétiser les aimants 8, en vue de libérer la moitié de moule 16, il est avantageux d'envoyer dans les bobinages 10 des trains successifs d'impulsions de courant électrique, qui comprennent chacun des impulsions successives de même signe, en faisant alterner des trains d'impulsions positives et des trains d'impulsions négatives, les intensités des trains d'impulsions étant décroissantes dans le temps, depuis le premier train d'impulsions jusqu'au dernier train d'impulsions. Chacun des trains d'impulsions, ici de sens alternés et dégressifs, peut lui-même comporter dix impulsions et posséder une durée de 0,1 seconde, une opération de démagnétisation complète pouvant durer environ 20 secondes.

L'on ne s'éloignerait pas du cadre de l'invention, telle que définie dans les revendications annexées :
- en modifiant le nombre, la forme et la disposition des pôles magnétiques du plateau ;
- en variant le nombre de spires des bobines de ces pôles magnétiques;
- en ayant recours à tous matériaux équivalents de ceux mentionnés ;
- en remplaçant les cartouches chauffantes cylindriques par d'autres moyens de chauffage, notamment sous forme de résistances plates;
- en utilisant d'autres procédures de magnétisation et de démagnétisation que celles indiquées;
- en destinant ce plateau magnétique non seulement aux presses à injecter le caoutchouc, mais encore à des machines pour l'injection de matières analogues, telles que les élastomères, nécessitant elles aussi un maintien des moules à des températures élevées.

## Revendications

1. Plateau magnétique pour la fixation de moules sur des machines à injecter le caoutchouc ou les élastomères, ce plateau magnétique (1) étant du type "électro-permanent", avec des aimants permanents (8) entourés par des bobines électriques (10), caractérisé en ce qu'il comporte, sur un côté d'une partie (2) recevant des éléments chauffants (4), une pluralité de pôles magnétiques comportant chacun un ou plusieurs aimants (8) recouverts par une pièce polaire (9) et entourés d'un bobinage (10) formé de spires de câble métallique (11) avec isolation à base de verre et de silicone, le bobinage (10) étant lui-même enrobé dans une matière de blocage (12) telle que résine "haute température" ou ciment réfractaire.

2. Plateau magnétique selon la revendication 1, caractérisé en ce que la partie recevant des éléments chauffants, est une semelle chauffante (2), en acier doux, pourvue d'alésages (3) recevant des cartouches chauffantes (4), et située du côté opposé à la fixation des moules (16).

3. Plateau magnétique selon la revendication 2, caractérisé en ce qu'un cadre (5), en matière ferromagnétique, est appliqué et fixé contre une face de la semelle (3), et délimite une pluralité d'ouvertures (7) correspondant aux pôles magnétiques du plateau (1), dont la disposition est, de préférence, du type "pôles parallèles".

4. Plateau magnétique selon l'une quelconque des revendications 1 à 3, caractérisé en ce que les aimants (8) sont du type ALNICO.

5. Plateau magnétique selon l'une quelconque des revendications 1 à 4, caractérisé en ce que les bobinages (10) sont constitués de spires de câble avec âme en cuivre (11), entourée de guipages de verre imprégnés de silicone, eux-mêmes recouverts d'une tresse de verre siliconée.
